# EUROPEAN PATENT APPLICATION

(11) **EP 4 797 104 A1**
(43) Date of publication of application: **26.08.2026**
(21) Application number: 24887401.8
(22) Date of filing: 18.06.2024
(51) Int. Cl.: G06F 12/0817

(54) **CHIP SYSTEM AND ACCESS METHOD**

(30) Priority: 10.11.2023 CN 202311502072
(71) Applicant: HUAWEI TECHNOLOGIES CO., LTD., Shenzhen, Guangdong 518129 (CN)
(72) Inventor: HAN, Lihu, Shenzhen, Guangdong 518129 (CN); LIU, Ruoyu, Shenzhen, Guangdong 518129 (CN)
(74) Representative: Goddar, Heinz J.
(86) International application number: PCT/CN2024/099910
(87) International publication number: WO 2025/097777

(57) **Abstract**

This application relates to the field of chip technologies and provides a chip system and an access method, to improve data access performance of a high-performance computing system. A specific solution is as follows: The chip system includes a snooping filter, a plurality of processor cluster nodes, and a plurality of memories. The plurality of processor cluster nodes are coupled to each other through a bus, the snooping filter is coupled to the bus, the plurality of processor cluster nodes one-to-one correspond to the plurality of memories, and the snooping filter uses a unified directory format. The snooping filter is configured to obtain an access request initiated by a processor cluster node, where the access request includes address information. The snooping filter is further configured to determine an access mode of the access request based on the address information, where the access mode includes a uniform memory access mode and a non-uniform memory access mode. The processor cluster node is configured to access a memory based on the access mode and the access request. Embodiments of this application are applied to a process in which a processor cluster node accesses a memory.

## Description

This application claims priority to Chinese Patent Application No. 202311502072.1, filed with the China National Intellectual Property Administration on November 10, 2023 and entitled "CHIP SYSTEM AND ACCESS METHOD", which is incorporated herein by reference in its entirety.

### TECHNICAL FIELD

This application relates to the field of chip technologies, and in particular, to a chip system and an access method.

### BACKGROUND

A current high-performance computing (high-performance computing, HPC) system has features of "multi-core" and "high computational power". In the fields of processing a large amount of data and high-performance computing, for example, in the fields such as scientific computing, artificial intelligence, and big data analysis, the high-performance computing system demonstrates a powerful processing capability.

However, as data increases, high-bandwidth data access performance has become one of bottlenecks that restrict the high-performance computing system. Therefore, how to improve data access performance of a high-performance computing system becomes an urgent problem to be resolved.

### SUMMARY

This application provides a chip system and an access method, to improve data access performance of a high-performance computing system.

To achieve the foregoing objective, the following technical solutions are used in this application.

According to a first aspect, this application provides a chip system. The chip system includes a snooping filter, a plurality of processor cluster nodes, and a plurality of memories. The plurality of processor cluster nodes are coupled to each other through a bus, the snooping filter is coupled to the bus, the plurality of processor cluster nodes one-to-one correspond to the plurality of memories, and the snooping filter uses a unified directory format. The snooping filter is configured to obtain an access request initiated by a processor cluster node, where the access request includes address information. The snooping filter is further configured to determine an access mode of the access request based on the address information, where the access mode includes a uniform memory access mode and a non-uniform memory access mode. The processor cluster node is configured to access a memory based on the access mode and the access request. The plurality of memories may be classified into a local memory and a remote memory relative to each processor cluster node.

Therefore, in the chip system provided in this embodiment of this application, the snooping filter may determine the access mode of the access request based on an address carried in the access request. For example, if the address information represents that the access request is for accessing the local memory, the non-uniform memory access mode may be used, so that quick access can be implemented. If the address information represents that the access request is for accessing the remote memory, the uniform memory access mode may be used. Because only one snooping filter is used in this embodiment of this application, and the snooping filter uses the unified directory format, a forwarding procedure between snooping filters can be streamlined, access of a data flow between the snooping filters can be optimized, and advantages of both the uniform memory access mode and the non-uniform memory access mode can be incorporated, thereby increasing a speed of accessing the remote memory.

In a possible design, a first processor cluster node in the plurality of processor cluster nodes corresponds to a first memory in the plurality of memories. When the first processor cluster node initiates the access request, if the address information is within an address range corresponding to the first memory, the access mode of the access request is the non-uniform memory access mode. The first processor cluster node is configured to access data that corresponds to the address information and that is in the first memory. In this way, the first memory may be understood as a local memory of the first processor cluster node. In this case, the non-uniform memory access mode may be used to implement quick access.

In a possible design, a second processor cluster node in the plurality of processor cluster nodes corresponds to a second memory in the plurality of memories. If the address information is within an address range corresponding to the second memory, the access mode of the access request is the uniform memory access mode. The first processor cluster node is configured to access, through the bus, data that corresponds to the address information and that is in the second memory. In this way, if the access request is for accessing a remote memory of the first processor cluster node, the uniform memory access mode may be used. Because only one snooping filter is used in this embodiment of this application, and the snooping filter uses the unified directory format, a forwarding procedure between snooping filters can be streamlined, access of a data flow between the snooping filters can be optimized, and advantages of both the uniform memory access mode and the non-uniform memory access mode can be incorporated, thereby increasing a speed of accessing the remote memory.

In a possible design, the processor cluster node includes at least one processor core.

In a possible design, the processor cluster node further includes a cache. If the address information is within an address range corresponding to the cache, the processor cluster node is configured to access data that corresponds to the address information and that is in the cache. In this way, if data corresponding to the access request is stored in the cache, the processor cluster node directly accesses the data that corresponds to the address information and that is in the cache, thereby increasing an access speed.

According to a second aspect, an embodiment of this application provides an access method. The access method is applied to a chip system. The chip system includes a snooping filter, a plurality of processor cluster nodes, and a plurality of memories. The plurality of processor cluster nodes are coupled to each other through a bus, the snooping filter is coupled to the bus, the plurality of processor cluster nodes one-to-one correspond to the plurality of memories, and the snooping filter uses a unified directory format. The method includes: The snooping filter obtains an access request initiated by a processor cluster node, where the access request includes address information; the snooping filter determines an access mode of the access request based on the address information, where the access mode includes a uniform memory access mode and a non-uniform memory access mode; and the processor cluster node accesses a memory based on the access mode and the access request.

In a possible design, a first processor cluster node in the plurality of processor cluster nodes corresponds to a first memory in the plurality of memories. When the first processor cluster node initiates the access request, if the address information is within an address range corresponding to the first memory, the access mode of the access request is the non-uniform memory access mode, and that the processor cluster node accesses the memory based on the access mode and the access request includes: The first processor cluster node accesses data that corresponds to the address information and that is in the first memory.

In a possible design, a second processor cluster node in the plurality of processor cluster nodes corresponds to a second memory in the plurality of memories. If the address information is within an address range corresponding to the second memory, the access mode of the access request is the uniform memory access mode, and that the processor cluster node accesses the memory based on the access mode and the access request includes: The first processor cluster node accesses, through the bus, data that corresponds to the address information and that is in the second memory.

In a possible design, the processor cluster node includes at least one processor core.

In a possible design, the plurality of processor cluster nodes further include a cache; and the method further includes: If the address information is within an address range corresponding to the cache, the plurality of processor cluster nodes access data that corresponds to the address information and that is in the cache.

For beneficial effect of the second aspect, refer to the description in the first aspect.

According to a third aspect, an embodiment of this application provides an electronic device. The electronic device includes one or more interface circuits and one or more chip systems according to the first aspect. The interface circuit and the chip system are interconnected through a line.

According to a fourth aspect, an embodiment of this application provides a computer-readable storage medium, including computer instructions. When the computer instructions are run on an electronic device, the electronic device is enabled to perform the access method according to any one of the second aspect and the possible implementations of the second aspect.

According to a fifth aspect, an embodiment of this application provides a computer program product. When the computer program product runs on a computer or a processor, the computer or the processor is enabled to perform the access method according to any one of the second aspect and the possible implementations of the second aspect.

It may be understood that any of the chip system, the computer-readable storage medium, the computer program product, or the like provided above may be applied to the corresponding method provided above. Therefore, for beneficial effect that can be achieved by the chip system, the computer-readable storage medium, the computer program product, or the like, refer to the beneficial effect of the corresponding method. Details are not described herein again.

These aspects or other aspects in this application are more concise and comprehensible in the following descriptions.

### BRIEF DESCRIPTION OF DRAWINGS

FIG. 1 is a diagram of a UMA architecture according to an embodiment of this application;
FIG. 2 is a diagram of an NUMA architecture according to an embodiment of this application;
FIG. 3 is a flowchart of access based on an NUMA architecture according to an embodiment of this application;
FIG. 4 is a diagram of a structure of a chip system according to an embodiment of this application;
FIG. 5 is a diagram of a structure of another chip system according to an embodiment of this application; and
FIG. 6 is a flowchart of an access method according to an embodiment of this application.

### DESCRIPTION OF EMBODIMENTS

The following describes technical solutions in embodiments of this application with reference to accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, ''a plurality of'' means two or more.

The terms ''first'' and ''second'' mentioned below are merely intended for a purpose of description, and shall not be understood as an indication or implication of relative importance or implicit indication of a quantity of indicated technical features. Therefore, a feature limited by ''first'' or ''second'' may explicitly or implicitly include one or more such features. In the descriptions of embodiments, unless otherwise specified, "a plurality of" means two or more.

Currently, a memory system of a plurality of processor cores in a high-performance computing system is mainly a shared memory (shared memory), where the shared memory may include a uniform memory access (uniform memory access, UMA) architecture and a non-uniform memory access (non-uniform memory access, NUMA) architecture.

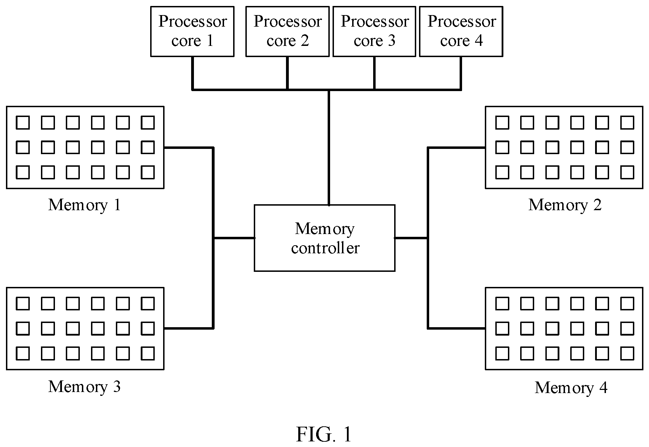

Specifically, FIG. 1 is a diagram of a UMA architecture according to an embodiment of this application. The UMA architecture may include a plurality of processor cores (cores), a memory controller (memory controller), and a plurality of memories (memories). FIG. 1 shows four processor cores: a processor core 1, a processor core 2, a processor core 3, and a processor core 4. FIG. 1 further shows four memories: a memory 1, a memory 2, a memory 3, and a memory 4. The plurality of processor cores are coupled to the memory controller through one bus, and the memory controller is separately coupled to the plurality of memories through a plurality of buses. In this way, the plurality of processor cores may access all available memories in a memory system through one bus, and each processor core accesses the memory at a same time.

However, as a quantity of processor cores increases, the plurality of processor cores access the memories through a same bus, which increases load of the bus. The UMA architecture restricts scalability and performance of the high-performance computing system.

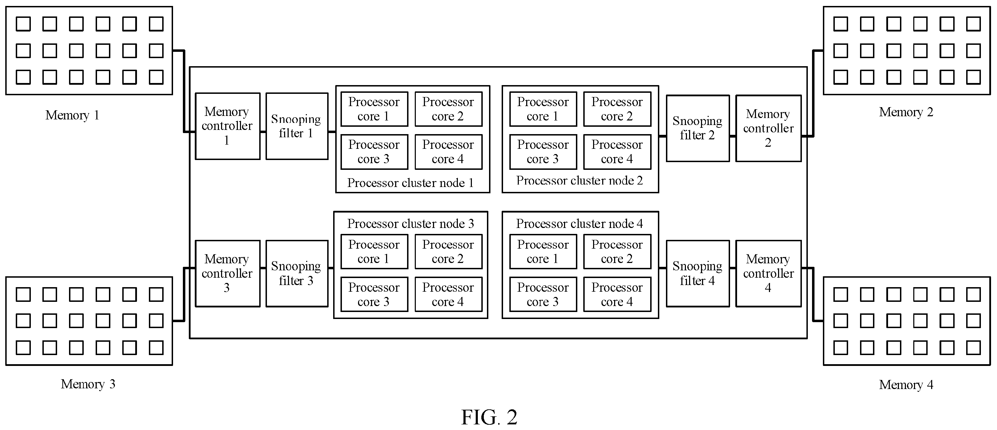

Therefore, an NUMA architecture is proposed. FIG. 2 is a diagram of an NUMA architecture according to an embodiment of this application. In the NUMA architecture, a plurality of processor cores form a processor cluster node (node). FIG. 2 shows four processor cluster nodes in total: a processor cluster node 1, a processor cluster node 2, a processor cluster node 3, and a processor cluster node 4. Each processor cluster node may include four processor cores: a processor core 1, a processor core 2, a processor core 3, and a processor core 4. Each processor cluster node corresponds to one snooping filter. For example, the processor cluster node 1 corresponds to a snooping filter 1, the processor cluster node 2 corresponds to a snooping filter 2, the processor cluster node 3 corresponds to a snooping filter 3, and the processor cluster node 4 corresponds to a snooping filter 4. In addition, each processor cluster node further corresponds to one memory controller and one memory. FIG. 2 separately shows four memories: a memory 1, a memory 2, a memory 3, and a memory 4. FIG. 2 further shows four memory controllers: a memory controller 1, a memory controller 2, a memory controller 3, and a memory controller 4. It may be understood that each processor cluster node may alternatively include more processor cores, and the high-performance computing system may alternatively include more processor cluster nodes. The structure in FIG. 2 is merely an example for description.

In the NUMA architecture, shared memories of all the processor cluster nodes are physically distributed in an entire memory system, and a set of all memories is a global memory of the entire memory system. In this way, time for each processor core to access the memory depends on a position of the memory relative to the processor core. Specifically, the memory 1 may be understood as a local memory of the processor cluster node 1, and the memory 2, the memory 3, and the memory 4 may be understood as remote memories of the processor cluster node 1. In addition, for definitions of a local memory and a remote memory of another processor cluster node, refer to the local memory and the remote memory of the processor cluster node 1. A processor core in the processor cluster node accesses the local memory at a speed higher than that of accessing the remote memory.

However, in the NUMA architecture, a delay of accessing the remote memory is far greater than that of accessing the local memory. When a quantity of processor cores increases, performance of the high-performance computing system cannot be linearly improved, and software usability of the NUMA architecture is poor.

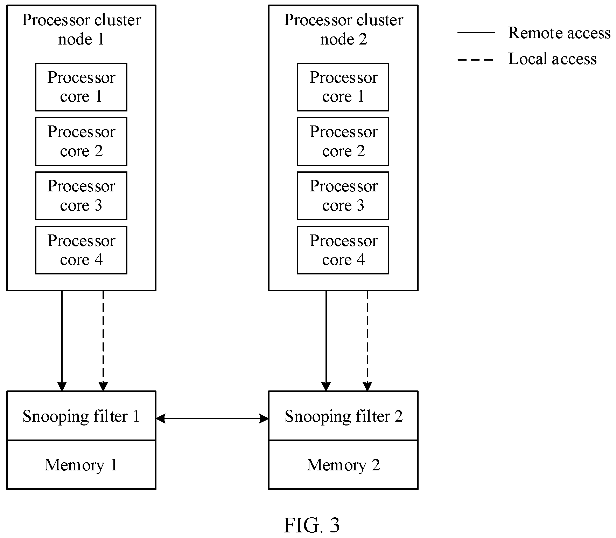

FIG. 3 is a flowchart of access based on an NUMA architecture according to an embodiment of this application. Each node corresponds to one snooping filter (snooping filter, SF). FIG. 3 separately shows a processor cluster node 1 and a processor cluster node 2. A processor cluster node 1, a snooping filter 1, and a memory 1 are in a one-to-one correspondence, a processor cluster node 2, a snooping filter 2, and a memory 2 are in a one-to-one correspondence. The memory 1 is equivalent to a local memory of the processor cluster node 1, and the memory 2 is equivalent to a remote memory of the processor cluster node 2. If the processor cluster node 1 accesses the memory 1, it is local access, and if the processor cluster node 1 accesses the memory 2, it is remote access.

In a possible example, the processor cluster node 1 initiates an access request, and the access request is for accessing data in the memory 1, that is, the processor cluster node 1 accesses data in the local memory. In this case, the processor cluster node 1 sends the access request to the snooping filter 1. After obtaining the corresponding data from the memory 1, the snooping filter 1 sends the data to the processor cluster node 1. In addition, a procedure in which the processor cluster node 2 accesses the memory 2 is the same as the procedure in which the processor cluster node 1 accesses the memory 1.

In another possible example, the processor cluster node 1 initiates an access request, and the access request is for accessing data in the memory 2, that is, the processor cluster node 1 accesses data in the remote memory. In this case, the processor cluster node 1 sends the access request to the snooping filter 1. The snooping filter 1 then forwards the access request to the snooping filter 2. After obtaining the corresponding data from the memory 2, the snooping filter 2 sends the data to the snooping filter 1. The snooping filter 1 sends the data to the processor cluster node 1.

That is, in the NMUA architecture, if a processor cluster node needs to access a remote memory, the processor cluster node sends an access request to a snooping filter corresponding to the current processor cluster node, and then the access request is forwarded to a snooping filter corresponding to a remote memory. In this way, when the access request is forwarded, bandwidth waste is caused. In addition, space waste also occurs in the snooping filter corresponding to the current processor cluster node.

Therefore, an embodiment of this application provides a chip system. The chip system includes a snooping filter, a plurality of processor cluster nodes, and a plurality of memories. The snooping filter may determine an access mode of an access request based on address information carried in the access request. For example, if the address information represents that the access request is for accessing a local memory, a non-uniform memory access mode may be used, so that quick access can be implemented. If the address information represents that the access request is for accessing a remote memory, a uniform memory access mode may be used. Because only one snooping filter is used in this embodiment of this application, and the snooping filter uses a unified directory format, a forwarding procedure between snooping filters can be streamlined, access of a data flow between the snooping filters can be optimized, and advantages of both the uniform memory access mode and the non-uniform memory access mode can be incorporated, thereby increasing a speed of accessing the remote memory.

For ease of understanding, the following first describes a device used in the chip system provided in this embodiment of this application. The device used in the chip system provided in this embodiment of this application may be an execution device. The execution device may be a terminal, for example, a mobile phone terminal, a tablet computer, a notebook computer, an augmented reality (augmented reality, AR) device, a virtual reality (virtual reality, VR) device, or a vehicle-mounted terminal, or may be a server cluster or the like. The chip system provided in this embodiment of this application may be applied to fields in which a large amount of data and high-performance computing are involved in the execution device, for example, scientific computing, artificial intelligence, and big data analysis.

In some embodiments, the chip system provided in this embodiment of this application may be a system-on-a-chip (system-on-a-chip, SoC), a server chip, or the like.

The following describes in detail, with reference to the accompanying drawings, a chip system that is provided in an embodiment of this application and that is applied to the foregoing scenario.

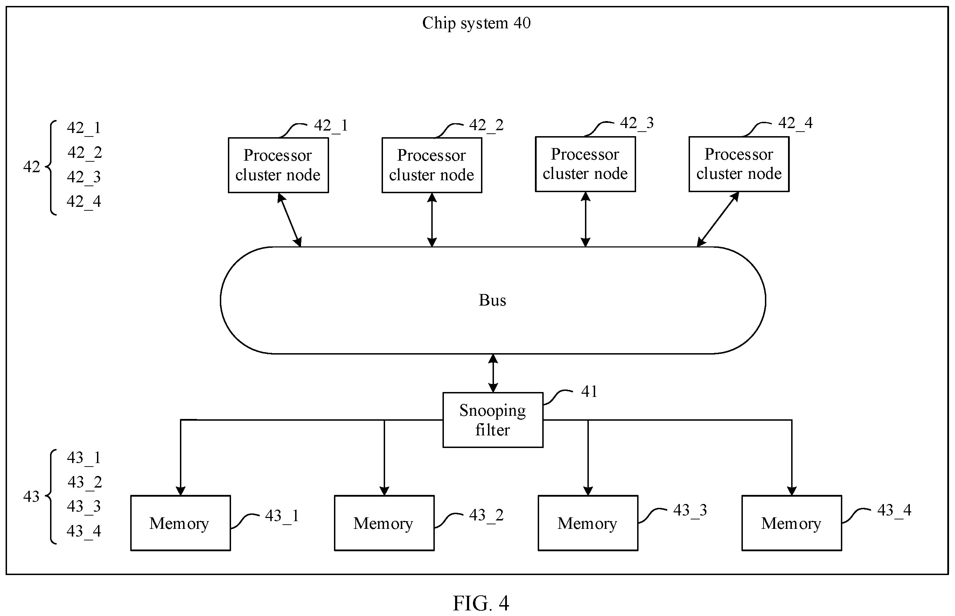

An embodiment of this application provides a chip system. FIG. 4 is a diagram of a structure of a chip system according to an embodiment of this application. A chip system 40 includes a snooping filter 41, a plurality of processor cluster nodes 42, and a plurality of memories 43. The plurality of processor cluster nodes 42 are coupled to each other through a bus, the plurality of processor cluster nodes 42 one-to-one correspond to the plurality of memories 43, and the snooping filter 41 is coupled to the bus. FIG. 4 shows four processor cluster nodes 42, for example, a processor cluster node 42_1, a processor cluster node 42_2, a processor cluster node 42_3, and a processor cluster node 42_4. FIG. 4 further shows four memories 43, for example, a memory 43_1, a memory 43_2, a memory 43_3, and a memory 43_4. The processor cluster node 42_1 corresponds to the memory 43_1, the processor cluster node 42_2 corresponds to the memory 43_2, the processor cluster node 42_3 corresponds to the memory 43_3, and the processor cluster node 42_4 corresponds to the memory 43_4.

The snooping filter 41 is configured to obtain an access request initiated by a processor cluster node, where the access request includes address information.

For example, the access request initiated by the processor cluster node 42 may be reading data from the memory, or the access request may be writing data into the memory. In addition to the address information, the access request may further include a size (size) of to-be-read data. The processor cluster node 42 may include a memory management unit (memory manager unit, MMU). When the processor cluster node initiates an access request, an address carried in the access request at this time is a virtual address. The processor cluster node 42 may convert the virtual address into a physical address via the memory management unit, where the physical address is an address of the memory; and the processor cluster node 42 accesses data in the memory based on the physical address.

For example, the access request may also be understood as a cache operation instruction, and the snooping filter 41 may snoop the cache operation instruction on the bus. The snooping filter can snoop a data transaction on the bus and exchange information to ensure cache coherence. Specifically, in a bus architecture, all operations of a processor cluster node in the bus architecture may be known to another processor cluster node in the bus architecture. The processor cluster node 42_1 is used as an example. When the snooping filter 41 detects, through snooping, that an operation of another processor cluster node relates to a shared cache interface of the processor cluster node 42_1, a related operation may be performed to ensure cache coherence of the processor cluster node 42_1. Specifically, the snooping filter 41 may make the shared cache interface of the processor cluster node 42_1 invalid (invalid).

The snooping filter 41 uses a unified directory format.

For example, the snooping filter 41 may store a directory (directory), and the directory is in a unified directory format. The directory may include an identifier indicating whether data that the access request is to access is in the cache, an identifier indicating whether the data in the cache is valid data, an identifier indicating a quantity of caches in which the data that the access request is to access is located, and the like. Because only one snooping filter 41 is used in this embodiment of this application, and the snooping filter uses the unified directory format, access of a data flow between snooping filters 41 can be optimized, and advantages of both a uniform memory access mode and a non-uniform memory access mode can be incorporated.

Optionally, the processor cluster node 42 may include at least one processor core.

For example, in this embodiment of this application, the at least one processor core may form one processor cluster node, that is, the at least one processor core corresponds to a same memory. In a possible example, the processor cluster node 42_1 may include a processor core 1, a processor core 2, a processor core 3, and a processor core 4. If the processor cluster node 42_1 corresponds to the memory 43_1, the memory 43_1 is a local memory of the processor core 1, the processor core 2, the processor core 3, and the processor core 4, and the processor core 1, the processor core 2, the processor core 3, and the processor core 4 access the memory 43_1 at a higher speed.

For example, the processor core may be one or more of a central processing unit (central processing unit, CPU), a graphics processing unit (graphics processing unit, GPU), a neural processing unit (neural processing unit, NPU), and the like.

The snooping filter 41 is further configured to determine an access mode of the access request based on the address information, where the access mode includes a uniform memory access mode and a non-uniform memory access mode. The processor cluster node 42 is configured to access a memory 43 based on the access mode and the access request.

For example, the chip system provided in this embodiment of this application includes only one snooping filter 41. In other words, the snooping filter 41 may snoop access requests of all processor cluster nodes 42. The snooping filter 41 provided in this embodiment of this application may be understood as a sum of the plurality of snooping filters in FIG. 3. A directory format can be unified by using one snooping filter 41, and access of a data flow of the snooping filter 41 can be optimized. In addition, bandwidth waste caused by forwarding of an access request between snooping filters 41 can also be reduced.

For example, the memory 43 may be a high bandwidth memory (high bandwidth memory, HBM), or the memory 43 may be a double data rate synchronous dynamic random access memory (double data rate synchronous dynamic random access memory, DDR SDRAM), where the DDR SDRAM may be referred to as "DDR" for short. The memories 43 may be uniformly addressed, that is, the plurality of memories 43 form complete memory space. However, in the chip system, the plurality of memories 43 may be independently distributed at a physical layer. The memory 43_1 may be understood as a local memory of the processor cluster node 42_1, and the memory 43_2, the memory 43_3, and the memory 43_4 may be understood as remote memories of the processor cluster node 42_1. In addition, for definitions of a local memory and a remote memory of another processor cluster node, refer to the local memory and the remote memory of the processor cluster node 42_1.

In this way, the snooping filter 41 may determine the access mode of the access request based on the address information carried in the access request. For example, if the address information represents that the access request is for accessing the local memory, the non-uniform memory access mode may be used, so that quick access can be implemented. If the address information represents that the access request is for accessing the remote memory, the uniform memory access mode may be used, so that a forwarding procedure between snooping filters 41 can be streamlined, and access of a data flow between the snooping filters 41 can be optimized, thereby increasing a speed of accessing the remote memory.

Optionally, a first processor cluster node in the plurality of processor cluster nodes corresponds to a first memory in the plurality of memories. In other words, the first memory may be understood as a local memory of the first processor cluster node, and a memory other than the first memory in the plurality of memories may be understood as a remote memory of the first processor cluster node.

When the first processor cluster node initiates the access request, if the address information is within an address range corresponding to the first memory, the access mode of the access request is the non-uniform memory access mode, and the first processor cluster node is configured to access data that corresponds to the address information and that is in the first memory. If the address information is within an address range corresponding to a second memory, the access mode of the access request is the uniform memory access mode, and the first processor cluster node is configured to access, through the bus, data that corresponds to the address information and that is in the second memory.

The access mode of the access request may be determined based on the address information carried in the access request. If the address information represents that the first processor cluster node is exclusive, the non-uniform memory access mode may be used. If the address information represents that a plurality of processor cluster nodes are shared, the uniform memory access mode may be used. In other words, the snooping filter 41 may determine, based on the address information, a case in which the processor cluster node 42 accesses the memory 43, and the processor cluster node 42 may implement switching between the uniform memory access mode and the non-uniform memory access mode in combination with a register configuration.

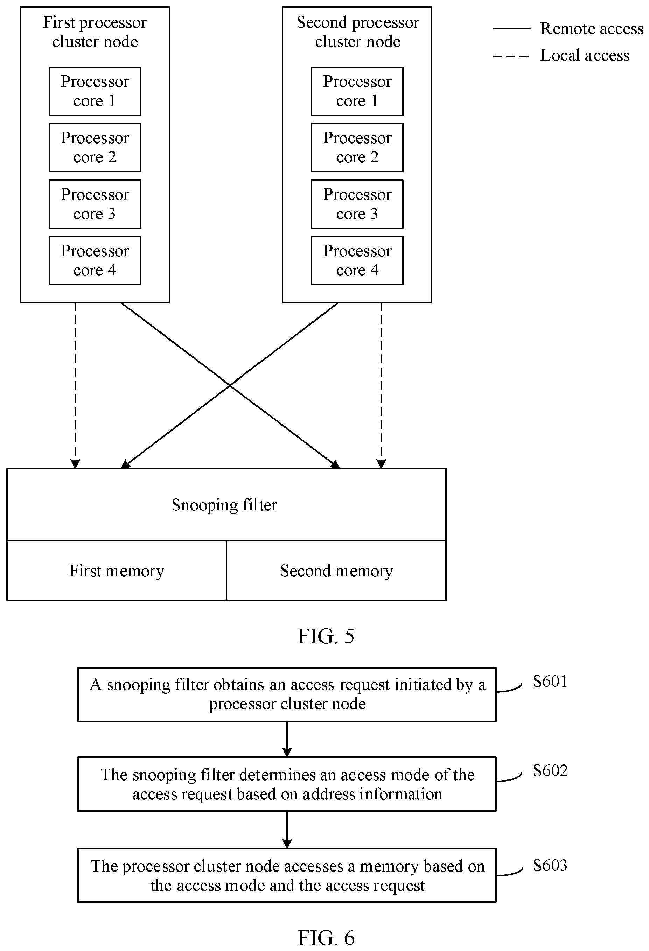

For example, FIG. 5 is a diagram of a structure of another chip system according to an embodiment of this application. FIG. 5 shows a first processor cluster node, a second processor cluster node, a first memory, a second memory, and a snooping filter. The first processor cluster node corresponds to the first memory, and the second processor cluster node corresponds to the second memory. In other words, the first memory is a local memory of the first processor cluster node, and the second memory is a remote memory of the first processor cluster node. That the first processor cluster node accesses the first memory is local access, and that the first processor cluster node accesses the second memory is remote access.

In a possible example, if the first processor cluster node initiates an access request to access the first memory, that is, the first processor cluster node initiates local access, the first processor cluster node sends the access request to the snooping filter, and the snooping filter obtains corresponding data from the first memory and then sends the data to the first processor cluster node.

In another possible example, if the first processor cluster node initiates an access request to access the second memory, that is, the first processor cluster node initiates remote access, the first processor cluster node accesses the second memory through a bus, and corresponding data is obtained from the second memory and then sent to the first processor cluster node.

Optionally, the processor cluster node further includes a cache (cache). If the address information is within an address range corresponding to the cache, the processor cluster node is configured to access data that corresponds to the address information and that is in the cache.

For example, the cache is a part of the processor cluster node. Specifically, the cache is a part of a processor core. A speed at which the processor core accesses the cache is higher than a speed at which the processor core accesses a memory. Therefore, commonly used data or a commonly used address may be stored in the cache, so that the processor core can directly invoke the data or the address. The processor core first searches the cache for the data corresponding to the address information. If the data corresponding to the address information is not stored in the cache, the processor core searches the memory for the data. In this way, an access speed and a running speed of the processor core can be increased.

In addition, the cache may include a level-1 cache, a level-2 cache, and a level-3 cache. A capacity order of the caches is: the level-1 cache<the level-2 cache<the level-3 cache, and a search order of the processor cores is: the level-1 cache, the level-2 cache, the level-3 cache, and the memory. In other words, if the address information represents that data corresponding to the access request is in the cache, the processor core directly accesses the cache to obtain the data that corresponds to the address information and that is in the cache.

For example, the cache may be a static random access memory (static random access memory, SRAM), or the cache may be a dynamic random access memory (dynamic random access memory, DRAM), or the like.

The following describes an access method that is provided in an embodiment of this application and that is applied to the foregoing chip system.

FIG. 6 is a flowchart of an access method according to an embodiment of this application. The method includes the following procedure.

S601: A snooping filter obtains an access request initiated by a processor cluster node. The access request includes address information.

For example, in a bus architecture, the snooping filter may snoop an access request on a bus. If the snooping filter detects, through snooping, that an operation of another processor cluster node relates to a shared cache of the processor cluster node, a related operation may be performed to ensure cache coherence.

S602: The snooping filter determines an access mode of the access request based on the address information. The access mode includes a uniform memory access mode and a non-uniform memory access mode.

S603: The processor cluster node accesses a memory based on the access mode and the access request.

For example, if the address information represents that the access request is for accessing a local memory, the non-uniform memory access mode may be used, so that quick access can be implemented. If the address information represents that the access request is for accessing a remote memory, the uniform memory access mode may be used, so that a forwarding procedure between snooping filters can be streamlined, and access of a data flow between the snooping filters can be optimized, thereby increasing a speed of accessing the remote memory.

Optionally, a first processor cluster node in a plurality of processor cluster nodes corresponds to a first memory in a plurality of memories. When the first processor cluster node initiates the access request, if the address information is within an address range corresponding to the first memory, the access mode of the access request is the non-uniform memory access mode. S603 may include: The first processor cluster node accesses data that corresponds to the address information and that is in the first memory.

For example, the first memory may be understood as a local memory of the first processor cluster node, and another memory may be understood as a remote memory of the first processor cluster node. If the access request is for accessing the local memory, a corresponding access mode is the non-uniform memory access mode, that is, the first processor cluster node accesses the data that corresponds to the address information and that is in the first memory.

Optionally, a second processor cluster node in the plurality of processor cluster nodes corresponds to a second memory in the plurality of memories. If the address information is within an address range corresponding to the second memory, the access mode of the access request is the uniform memory access mode. S603 may include: The first processor cluster node accesses, through the bus, data that corresponds to the address information and that is in the second memory.

For example, if the access request is for accessing the remote memory, a corresponding access mode is the uniform memory access mode, that is, the first processor cluster node accesses, through the bus, the data that corresponds to the address information and that is in the second memory.

Optionally, the processor cluster node includes at least one processor core.

Optionally, the processor cluster node further includes a cache. The access method provided in this embodiment of this application further includes: If the address information is within an address range corresponding to the cache, the processor cluster node accesses data that corresponds to the address information and that is in the cache.

For example, because a speed at which the processor cluster node accesses the cache is higher than a speed at which the processor cluster node accesses a memory, if data corresponding to the access request is stored in the cache, the processor cluster node first accesses the cache. In this way, an access speed and a running speed of the processor cluster node can be increased.

An embodiment of this application further provides an electronic device. The electronic device includes one or more interface circuits and one or more chip systems. The interface circuit and the chip system are interconnected through a line.

It may be understood that, to implement the foregoing functions, the electronic device includes a corresponding hardware and/or software module for performing each function. With reference to algorithm steps in the examples described in embodiments disclosed in this specification, this application can be implemented in a form of hardware or a combination of hardware and computer software. Whether a function is implemented by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the electronic device may be divided into functional modules based on the foregoing method examples. For example, each functional module corresponding to each function may be obtained through division, or two or more functions may be integrated into one processing module. The integrated module may be implemented in a form of hardware. It should be noted that module division in embodiments is an example and is merely logical function division. During actual implementation, there may be another division manner.

An embodiment of this application further provides a computer storage medium. The computer storage medium stores computer instructions. When the computer instructions are run on an electronic device, the electronic device is enabled to perform the foregoing related method steps, to implement the access method in the foregoing embodiments.

An embodiment of this application further provides a computer program product. When the computer program product runs on a computer, the computer is enabled to perform the foregoing related steps, to implement the access method performed by an electronic device in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the access method performed by an electronic device in the foregoing method embodiments.

The chip system, the electronic device, the computer storage medium, the computer program product, or the chip provided in embodiments is configured to perform the corresponding method provided above. Therefore, for beneficial effect that can be achieved by the chip system, the electronic device, the computer storage medium, the computer program product, or the chip, refer to the beneficial effect of the corresponding method provided above. Details are not described herein again.

Based on the descriptions of the foregoing implementations, it may be understood by a person skilled in the art that, for ease and brevity of description, division into the foregoing functional modules is merely used as an example for description. During actual application, the foregoing functions may be allocated to different functional modules for implementation based on a requirement, that is, an internal structure of an apparatus is divided into different functional modules, to implement all or a part of the functions described above.

In the several embodiments provided in this application, it should be understood that the disclosed apparatus and method may be implemented in other manners. For example, the described apparatus embodiment is merely an example. For example, the division into modules or units is merely logical function division. During actual implementation, another division manner may be used. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, and may be located in one place, or may be distributed on different places. A part or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When being implemented in the form of a software functional unit and sold or used as an independent product, the integrated unit may be stored in a readable storage medium. Based on such an understanding, the technical solutions in embodiments of this application essentially, or the part contributing to the conventional technology, or all or a part of the technical solutions may be implemented in a form of a software product. The software product is stored in a storage medium and includes several instructions for instructing a device (which may be a single-chip microcomputer, a chip, or the like) or a processor (processor) to perform all or a part of the steps of the methods in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A chip system, comprising a snooping filter, a plurality of processor cluster nodes, and a plurality of memories, wherein the plurality of processor cluster nodes are coupled to each other through a bus, the snooping filter is coupled to the bus, the plurality of processor cluster nodes one-to-one correspond to the plurality of memories, and the snooping filter uses a unified directory format;
the snooping filter is configured to obtain an access request initiated by a processor cluster node, wherein the access request comprises address information;
the snooping filter is further configured to determine an access mode of the access request based on the address information, wherein the access mode comprises a uniform memory access mode and a non-uniform memory access mode; and
the processor cluster node is configured to access a memory based on the access mode and the access request.

2. The chip system according to claim 1, wherein a first processor cluster node in the plurality of processor cluster nodes corresponds to a first memory in the plurality of memories; and
when the first processor cluster node initiates the access request, if the address information is within an address range corresponding to the first memory, the access mode of the access request is the non-uniform memory access mode, and the first processor cluster node is configured to access data that corresponds to the address information and that is in the first memory.

3. The chip system according to claim 2, wherein a second processor cluster node in the plurality of processor cluster nodes corresponds to a second memory in the plurality of memories; and
if the address information is within an address range corresponding to the second memory, the access mode of the access request is the uniform memory access mode, and the first processor cluster node is configured to access, through the bus, data that corresponds to the address information and that is in the second memory.

4. The chip system according to any one of claims 1 to 3, wherein the processor cluster node further comprises a cache, and if the address information is within an address range corresponding to the cache, the processor cluster node is configured to access data that corresponds to the address information and that is in the cache.

5. An access method, wherein the method is applied to a chip system; the chip system comprises a snooping filter, a plurality of processor cluster nodes, and a plurality of memories, the plurality of processor cluster nodes are coupled to each other through a bus, the snooping filter is coupled to the bus, the plurality of processor cluster nodes one-to-one correspond to the plurality of memories, and the snooping filter uses a unified directory format; and the method comprises:
obtaining, by the snooping filter, an access request initiated by a processor cluster node, wherein the access request comprises address information;
determining, by the snooping filter, an access mode of the access request based on the address information, wherein the access mode comprises a uniform memory access mode and a non-uniform memory access mode; and
accessing, by the processor cluster node, a memory based on the access mode and the access request.

6. The method according to claim 5, wherein a first processor cluster node in the plurality of processor cluster nodes corresponds to a first memory in the plurality of memories; and when the first processor cluster node initiates the access request, if the address information is within an address range corresponding to the first memory, the access mode of the access request is the non-uniform memory access mode, and accessing, by the processor cluster node, the memory based on the access mode and the access request comprises:
accessing, by the first processor cluster node, data that corresponds to the address information and that is in the first memory.

7. The method according to claim 6, wherein a second processor cluster node in the plurality of processor cluster nodes corresponds to a second memory in the plurality of memories; and if the address information is within an address range corresponding to the second memory, the access mode of the access request is the uniform memory access mode, and accessing, by the processor cluster node, the memory based on the access mode and the access request comprises:
accessing, by the first processor cluster node through the bus, data that corresponds to the address information and that is in the second memory.

8. The method according to any one of claims 5 to 7, wherein the processor cluster node further comprises a cache; and the method further comprises:
if the address information is within an address range corresponding to the cache, accessing, by the processor cluster node, data that corresponds to the address information and that is in the cache.

9. An electronic device, comprising one or more interface circuits and one or more chip systems according to any one of claims 1 to 4, wherein the interface circuit and the chip system are interconnected through a line.

10. A computer-readable storage medium, comprising computer instructions, wherein when the computer instructions are run on an electronic device, the electronic device is enabled to perform the method according to any one of claims 5 to 8.
